(19) **Europäisches Patentamt**
**European Patent Office**
**Office européen des brevets**

(11) **EP 4 756 042 A1**

(12) **EUROPÄISCHE PATENTANMELDUNG**

(43) Veröffentlichungstag:
**10.06.2026 Patentblatt 2026/24**

(21) Anmeldenummer: **24217197.3**

(22) Anmeldetag: **03.12.2024**

(51) Internationale Patentklassifikation (IPC):
**C21B 5/00** *(2006.01)* **C22B 1/20** *(2006.01)*
**G01N 29/12** *(2006.01)* **G01N 29/14** *(2006.01)*

(52) Gemeinsame Patentklassifikation (CPC):
**C22B 1/20; C21B 5/008; C22B 1/205; G01N 29/12; G01N 29/14**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Primetals Technologies Austria GmbH**
**4031 Linz (AT)**

(72) Erfinder:
• **Boeberl, Michaela**
**4490 St. Florian (AT)**

• **Farveleder, Matthias**
**4020 Linz (AT)**
• **Bettinger, Dieter**
**4040 Plesching (AT)**
• **Fischer, Paul**
**4048 Puchenau (AT)**

(74) Vertreter: **Metals@Linz**
**Primetals Technologies Austria GmbH**
**Intellectual Property Upstream IP UP**
**Turmstraße 44**
**4031 Linz (AT)**

(54) **ONLINE-MONITORING DER SINTER-QUALITÄT**

(57) Die vorliegende Erfindung betrifft ein Verfahren (100) und ein System (20) zur Überwachung eines Sinterprozesses sowie ein Verfahren (200) zur Kalibration eines solchen Systems (20). Dabei werden folgende Schritte ausgeführt: i) sensorisches Erfassen (S1) eines Aufpralls eines Sinterkuchens (18) auf einer Aufprallfläche (8a) und Erzeugen entsprechender Sensordaten (D); ii) Ermitteln (S2) einer Aufprallcharakteristik (C) auf Grundlage der erzeugten Sensordaten (D); iii) Ermitteln (S3) einer Qualität des Sinters aus dem Sinterkuchen (18) auf Grundlage der ermittelten Aufprallcharakteristik (C); und iv) Ausgeben (S4) der ermittelten Sinterqualität über eine Schnittstelle (28).

FIG 1

## Beschreibung

Gebiet der Technik

Die vorliegende Erfindung betrifft ein Verfahren und ein System zur Überwachung eines Sinterprozesses sowie ein Verfahren zur Kalibration eines solchen Systems.

Stand der Technik

Zum Betrieb von Hochöfen ist es notwendig, dass das eingesetzte Eisenerz in granularer Form vorliegt. Die granulare Materie sollte dabei weitgehend homogen und das Korn eine möglichst homogene Größe in einem vorbestimmten Größenbereich aufweisen, damit eine Durchgasung der im Hochofen mit dem Granulat gebildeten Schüttung möglich ist.

Solches Eisenerz-Granulat wird üblicherweise mittels Sinteranlagen hergestellt, in denen Eisenerz mit Zuschlagstoffen durch einen Sinterprozess zu stabilen Körpern mit bestimmten Eigenschaften zusammengebacken wird. Der während des Sinterprozesses hergestellte, sogenannte Sinterkuchen wird zur Herstellung des Granulats dann aufgebrochen, beispielsweise mittels einer als sogenannter Stachelbrecher ausgebildeten Zerkleinerungsvorrichtung.

Die Qualität des so erzeugten Sinters kann jedoch variieren, da der Sinterprozess ein komplexer Prozess mit vielen Eingangsparametern ist. Beispielsweise können unbeabsichtigte oder unbemerkte Änderungen des Rohmaterialmixes (d. h. der Mischungsverhältnisse), Rohmaterialien mit variierenden Eigenschaften, geplante und/oder ungeplante Stillstände der Sinteranlage und/oder ungünstig gewählte Prozesssollwerte wie gewünschter Materialmix, Wasserzugabe, Fördergeschwindigkeit, Kühlleistung und/oder dergleichen die Sinterqualität beeinflussen.

Um den erzeugten Sinter zu charakterisieren, werden daher üblicherweise Bruchstücke des Sinters entnommen und im Labor beprobt. Auf diese Weise lassen sich Kenngrößen wie zum Beispiel der sogenannte Tumbler-Index oder der harmonische Durchmesser des Sinters bestimmen. Üblicherweise werden Proben aus mehreren verschiedenen Sinterkuchen gemischt und als repräsentative Mischprobe analysiert. Da die Probenentnahme erst nach einem Abkühlen des Sinters möglich ist, was je nach Anlage zwischen 1-5 Stunden dauern kann, und das Zusammenstellen der Mischprobe für gewöhnlich über eine Mittelungszeit von 4-8 Stunden erfolgt, steht ein Ergebnis der Analyse üblicherweise erst 2-13 Stunden nach der eigentlichen Produktion zur Verfügung. Einer im Rahmen dieser Analyse festgestellten Qualitätsänderung des fertigen Sinters kann daher erst mit deutlicher Verspätung entgegengewirkt werden.

Zusammenfassung der Erfindung

Vor diesem Hintergrund ist es eine Aufgabe der vorliegenden Erfindung, die Überwachung eines Sinterprozesses zu verbessern, insbesondere eine die Sinterqualität betreffende Information zeitnah bereitstellen zu können.

Diese Aufgabe wird gelöst durch ein Verfahren und ein System zur Überwachung eines Sinterprozesses sowie ein Verfahren zur Kalibration eines solchen Systems gemäß den unabhängigen Ansprüchen.

Bevorzugte Ausführungsformen der Erfindung sind Gegenstand der abhängigen Ansprüche sowie der folgenden Beschreibung.

Gemäß einem ersten Aspekt der Erfindung werden bei dem, vorzugsweise zumindest teilweise computerimplementierten, Verfahren zur Überwachung eines Sinterprozesses folgende Schritte ausgeführt: i) sensorisches Erfassen eines Aufpralls eines Sinterkuchens auf einer Aufprallfläche und Erzeugen entsprechender Sensordaten; ii) Ermitteln einer Aufprallcharakteristik auf Grundlage der erzeugten Sensordaten; iii) Ermitteln einer Qualität des Sinters aus dem Sinterkuchen auf Grundlage der ermittelten Aufprallcharakteristik; und iv) Ausgeben der ermittelten Sinterqualität, z. B. über eine Schnittstelle.

Ein Sinterkuchen im Sinne der vorliegenden Erfindung bezeichnet vorzugsweise durch Wärmebehandlung zumindest teilweise zusammengebackene Einsatzstoffe, zum Beispiel Metallerz, Brennstoff (etwa Koksgrus) und Kalksandstein. Ein derartiger Sinterkuchen kann zum Beispiel hergestellt werden, indem eine auch als Materialmix bezeichnete Mischung der Einsatzstoffe auf einem aus mehreren, sogenannten Rostwägen bestehendem Sinterband zusammengebacken wird, indem der Brennstoff in der Mischung gezündet wird. Ein Unterdrucksystem unter dem Sinterband sorgt dafür, dass die die Mischung von oben her vollständig durchbrennt.

Eine Qualität des Sinters, kurz Sinterqualität, im Sinne der vorliegenden Erfindung ist ein Maß für eine Güte des betrachteten Sinters, entweder absolut oder relativ. Die Sinterqualität kann also eine quantitative Aussage oder eine qualitative Aussage über die Güte des Sinters erlauben. Beispielsweise kann die Sinterqualität durch eine charakteristische Größe wie den Tumbler-Index oder den harmonischen Durchmesser absolut angegeben werden. Alternativ kann die Sinterqualität aber auch relativ zu einer mittleren oder anderen Sinterqualität, also beispielsweise als Zu- oder Abnahme, angegeben werden. Das Ermitteln einer Qualität des Sinters aus dem Sinterkuchen auf Grundlage einer ermittelten Aufprallcharakteristik muss also nicht zwingend ein absolutes, für sich stehendes Maß für die Güte des Sinters zum Ergebnis haben; vielmehr ist es auch möglich, dass eine derart ermittelte Sinterqualität erst im Vergleich zu einer auf dieselbe Weise, etwa zu einem späteren Zeitpunkt ermittelte Sinterqualität eine Aussage über die (relative) Güte des betrachteten Sinters erlaubt.

Die Sinterqualität kann beispielsweise in Form des sog. harmonischen Durchmessers angegeben werden. Der harmonische Durchmesser fasst die Korngrößenverteilung von Sinter in einer Kennzahl zusammen, die in engem Zusammenhang mit der für den Hochofen wichtigen Durchgasbarkeit steht:

$$D_H = 1 \Big/ \sum x_i / D_i$$

mit

$D_H$      Harmonischer Durchmesser
$x_i$      Anteil der Korngröße i
$D_i$      Mittlerer Durchmesser der Korngröße i

Alternativ kann die Sinterqualität in Form des sog. Tumbler-Index angegeben werden. Der Tumbler-Index ist ein relatives Maß für die Widerstandsfähigkeit eines Materials gegen Bruch oder Zerfall durch Stoßbelastung und in ISO3271 definiert.

Ein Aspekt der Erfindung beruht auf dem Ansatz, die Sinterqualität anhand einer Auswertung des Aufpralls eines Körpers aus gesintertem Material auf einer Aufprallfläche zu ermitteln. Es hat sich nämlich gezeigt, dass die Materialeigenschaften des Sinters einen Einfluss darauf haben können, wie sich der Körper beim Aufprall auf einer Aufprallfläche verhält. Je nach Materialeigenschaften kann beispielsweise die Größe und/oder Anzahl der Teile variieren, in die der Körper beim Aufprall zerspringt, wie viel der kinetischen Energie des fallenden Körpers in die Umgebung übertragen, zum Beispiel an die Aufprallfläche und/oder in die umgebende Luft abgegeben, wird. Der Aufprall, zum Beispiel die beim Aufprall in der Aufprallfläche erzeugten Vibrationen und/oder die in die Umgebungsluft abgegebenen Schallwellen, wird zweckmäßigerweise mittels einer Sensorvorrichtung erfasst. Die dabei erzeugten Sensordaten erlauben eine datengestützte Charakterisierung des Aufpralls. Ausgehend von dieser Aufprallcharakteristik lassen sich dann Rückschlüsse auf die Sinterqualität ziehen. Anders gesagt kann aus der Aufprallcharakteristik eine Sinterqualität abgeleitet werden. Eine Aussage über die Sinterqualität kann auf diese Weise auch unmittelbar nach dem Sinterprozess getroffen werden, insbesondere bevor der gesinterte Körper abgekühlt ist. Zugleich ist auch kein Warten auf das Ergebnis einer Laboranalyse notwendig. Infolgedessen ist auch eine zeitnahe Anpassung des Sinterprozesses möglich, falls die Sinterqualität als nicht zufriedenstellend erachtet wird. Dadurch lässt sich vermeiden, dass unnötigerweise eine große Menge an minderwertigem Sintermaterial produziert wird. Qualitätseinbußen können frühzeitig festgestellt und Gegenmaßnahmen ergriffen werden.

Dahingehend ist es auch zweckdienlich, dass die auf Grundlage der ermittelten Aufprallcharakteristik ermittelte Sinterqualität über eine Schnittstelle ausgegeben wird, zum Beispiel an Bedienpersonal der Sinteranlage. Das Bedienpersonal kann entsprechend Gegenmaßnahmen bei einer Verschlechterung der Sinterqualität einleiten. Alternativ ist es auch denkbar, dass die Sinterqualität direkt an ein Steuerungssystem der Sinteranlage ausgegeben wird, wobei dieses Steuerungssystem dann vorzugsweise zur Steuerung des Sinterprozesses auf Grundlage der ermittelten Sinterqualität eingerichtet ist.

Eine derartige Analyse des Sinters anhand von Sensordaten, die beim sensorischen Erfassen eines Aufpralls von Sinterkuchen auf einer Aufprallfläche erzeugt werden, ist auch deshalb ohne großen Aufwand möglich, da der Sinterkuchen aus den Rostwägen am Ende des Sinterbands abgeworfen wird. Der Sinterkuchen landet üblicherweise auf einer Sinterrutsche, welche den Sinterkuchen oder jedenfalls die beim Aufprall auf der Sinterrutsche erzeugten Bruchstücke einer Zerkleinerungsvorrichtung, zum Beispiel einem Stachelbrecher, zuführt. Zum Ermitteln der Sinterqualität kann bereits dieser Aufprall auf der Sinterrutsche herangezogen werden. Die Aufprallfläche kann also von der Sinterrutsche gebildet sein. Das erfindungsgemäße Verfahren lässt sich entsprechend nahtlos in den bereits etablierten Produktionsprozess für Eisenerz-Granulat, wie es in einem Hochofen Anwendung findet, integrieren.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer bevorzugten Ausführungsform wird der Aufprall mittels eines akustischen Sensors, insbesondere in einem Frequenzbereich von 30 kHz bis 50 kHz, erfasst. Bei dem akustischen Sensor handelt es sich in diesem Fall zweckmäßigerweise um ein Mikrofon. Die Erfassung von Schallwellen, insbesondere im hochfrequenten Bereich, ist eine einfach zu etablierende und industriell robuste Messmethode. Bei einem akustischen Erfassen des Aufpralls können Beeinträchtigungen der Messung durch beim Sinterprozess herrschende widrige Umgebungsbedingungen, zum Beispiel Staub und Hitze, zumindest weitestgehend ausgeschlossen oder zumindest minimiert werden. Insbesondere ist es auch möglich, einen akustischen Sensor geschützt in der Umgebung der Aufprallfläche zu platzieren, ohne dass dies die Sensitivität der akustischen Messung mindert.

In einer weiteren bevorzugten Ausführungsform werden durch den Aufprall erzeugte Vibrationen der Aufprallfläche und/oder eines mit der Aufprallfläche verbundenen Bauteils mittels eines Vibrationssensors, insbesondere in einem Frequenzbereich von 500 Hz bis 10 kHz, erfasst. In diesem Fall ist der Vibrationssensor zweckmäßigerweise als Körperschallaufnehmer ausgebildet. Es kann also beim Aufprall erzeugter Körperschall, d. h. sich in der Aufprallfläche ausbreitende Schwingungen, erfasst werden. Besonders vorteilhaft können zum Beispiel die Vibrationen einer Sinterrutsche oder einer anderen Fördereinrichtung, die den Sinterkuchen oder dessen Bruchstücke zu der Zerkleinerungsvorrichtung befördert, erfasst werden. Es hat sich gezeigt, dass die Stärke der Vibrationen bzw. Körperschall ein guter Indikator für die Festigkeit des gesinterten Materials ist. Gegenüber einer akustischen Messung hat das Erfassen von Vibrationen bzw. Körperschall den Vorteil einer besseren Entkopplung von der Umgebung. Infolgedessen kann bei der Erfassung von Vibrationen bzw. Körperschall die Aufprallcharakteristik noch präziser bestimmt bzw. die Sinterqualität noch zuverlässiger ermittelt werden.

In einer weiteren bevorzugten Ausführungsform wird auf Grundlage der erzeugten Sensordaten eine Aufprallintensität ermittelt. Es kann also die Stärke des Aufpralls, beispielsweise die Stärke der Vibrationen der Aufprallfläche (oder eines damit verbundenen Bauteils) oder Schallwellen ermittelt werden. Zweckmäßigerweise wird die ermittelte Aufprallintensität dann der Qualitätsermittlung zugrunde gelegt. Beispielsweise kann eine, insbesondere maximale, Amplitude der beim Aufprall erzeugten Schallwellen, d. h. der Lautstärke, oder eine, insbesondere maximale, Amplitude der beim Aufprall erzeugten Vibrationen der Aufprallfläche oder des damit verbundenen Bauteils, d. h. eine (maximale) Körperschallamplitude, ermittelt werden. Es hat sich nämlich gezeigt, dass die Aufprallintensität mit der Sinterfestigkeit korreliert. Aus der ermittelten Aufprallintensität kann folglich auf die Sinterfestigkeit geschlossen werden. Dabei deutet eine hohe Aufprallintensität auf einen festen Sinter hin, während eine geringe Aufprallintensität auf einen "weichen" bzw. weniger haltbaren Sinter hinweist.

In einer weiteren bevorzugten Ausführungsform wird eine den Aufprall charakterisierende Grö-ße, insbesondere die Aufprallintensität, zum Beispiel eine maximale Schall- oder Vibrationsamplitude, für mehrere, insbesondere aufeinanderfolgend abgeworfene, Sinterkuchen auf Grundlage der jeweils erzeugten Sensordaten ermittelt. Zweckmäßigerweise wird diese Größe, also z. B. die Aufprallintensität, über einen vorgegebenen Zeitraum gemittelt. Der vorgegebene Zeitraum erstreckt sich zweckmäßigerweise über das Aufprallen der mehreren Sinterkuchen auf die Aufprallfläche. Anschließend kann die Sinterqualität auf Grundlage der gemittelten Größe ermittelt werden. Es kann also ein Durchschnittswert für die Aufprallintensität bzw. die den Aufprall charakterisierende Größe, etwa die maximale Schall- oder Vibrationsamplitude, ermittelt werden. Dabei wird zweckmäßigerweise über die in dem vorgegebenen Zeitraum stattfindenden Aufprallereignisse gemittelt, zum Beispiel über einen Zeitraum zwischen 10 und 30 Minuten. Der so erhaltene Mittelwert korrespondiert zweckmäßigerweise mit der Aufprallcharakteristik. Die Mittelung über mehrere Abwürfe erlaubt eine zuverlässige, mittelfristige Aussage über die Sinterqualität.

In einer weiteren bevorzugten Ausführungsform wird ein Granulat aus dem Sinterkuchen hergestellt, indem der Sinterkuchen oder dessen Bruchstücke nach dem Aufprall, zum Beispiel mittels einer Zerkleinerungsvorrichtung, weiter aufgebrochen und gesiebt werden. Die Korngrößen im hergestellten Granulat können dann vermessen werden. So lässt sich insbesondere eine Verteilung der Korngrößen im hergestellten Granulat ermitteln. Die Sinterqualität wird zweckmäßigerweise zusätzlich auf Grundlage der ermittelten Korngrößenverteilung ermittelt. Durch die Berücksichtigung der Korngrößenverteilung im hergestellten Granulat, welche ebenfalls durch die Eigenschaften des gesinterten Materials beeinflusst wird, kann daher eine Aussage zur Sinterqualität noch zuverlässiger getroffen werden. Beispielsweise kann auf Grundlage der Korngrö-ßenverteilung der harmonische Durchmesser des Sinters be- und anschließend mit dem auf Grundlage der Aufprallcharakteristik ermittelten harmonischen Durchmesser verrechnet werden. Dabei kann auch, z. B. anhand eines im Rahmen der jeweiligen Ermittlung des harmonischen Durchmessers ermittelten Fehlers, eine Gewichtung vorgenommen werden.

In einer weiteren bevorzugten Ausführungsform wird die Sinterqualität auf Grundlage der ermittelten Aufprallcharakteristik von einem maschinell erlernten Modell ermittelt. Dieses maschinell erlernte Modell ist zweckmäßigerweise auf Grundlage von einem Trainingsdatensatz trainiert, in welchem eine Vielzahl von Aufprallcharakteristiken jeweils mit wenigstens einer Größe verknüpft sind, die das gesinterte Material charakterisiert. Diese charakteristische Größe kann beispielsweise der sogenannte Tumbler-Index und/oder ein harmonischer Durchmesser des gesinterten Materials sein. Diese charakteristische Größe ist durch eine Laboranalyse ermittelbar. Dadurch können verschiedene Aufprallcharakteristiken unterschiedlichen Sinterqualitäten zugeordnet werden. Mithilfe eines solchen maschinell erlernten Modells ist dann eine automatisierte, besonders zuverlässige Beurteilung der Sinterqualität möglich.

Ein maschinell erlerntes Modell im Sinne der Erfindung ist vorzugsweise ein von einem oder mehreren Algorithmen auf Grundlage von Trainingsdaten erzeugtes statistisches Modell. Das maschinell erlernte Modell kann insofern auch als trainiertes Modell bezeichnet werden. Das maschinell erlernte Modell ist zweckmäßigerweise das Ergebnis von maschinellen Lernen. Ein derart maschinell erlerntes Modell kann gemeinhin auch als künstliche Intelligenz bezeichnet werden, welche Muster und Gesetzmäßigkeiten in den Trainingsdaten erkannt hat und damit auch unbekannte Daten gemäß dieser Muster und Gesetzmäßigkeiten beurteilen oder auswerten kann. Das maschinell erlernte Modell kann beispielsweise auf einem neuronalen Netz (neural network), einem Zufallswald (random forest), einer Support Vector Machine (SVM) oder einem Entscheidungsbaum (decision tree) beruhen.

In einer weiteren bevorzugten Ausführungsform wird ein Messsignal, welches mit den beim Erfassen des Aufpralls erzeugten Sensordaten korrespondiert, durch Anwendung eines Mittelwertfilters geglättet. Die Aufprallcharakteristik wird dann zweckmäßigerweise auf Grundlage des geglätteten Messsignals ermittelt. Durch die Glättung lässt sich sicherstellen, dass bei einer Auswertung des Aufpralls, zum Beispiel bei der Ermittlung der Aufprallcharakteristik, stets das diesen Aufprall charakterisierende Gesamtsignal berücksichtigt wird, selbst wenn bei der Auswertung nur auf einzelne Teile des Messsignals zurückgegriffen wird. Wird der Ermittlung der Aufprallcharakteristik beispielsweise die Aufprallintensität, also zum Beispiel die Maximalamplitude der erfassten Schallwellen oder Vibrationen, zugrunde gelegt, so lässt sich durch die Glättung anhand des Mittelwertfilters sicherstellen, dass in die Aufprallcharakteristik auch die übrigen Signalanteile mit eingehen. Die ermittelte Aufprallintensität kann also beispielsweise, durch die Anwendung des Mittelwertfilters, kleiner ausfallen, als gemäß der reinen Maximalamplitude zunächst anzunehmen wäre. Infolgedessen ist eine differenziertere Analyse der Sensordaten bzw. des Signals möglich, was wiederum eine differenziertere Beurteilung der Sinterqualität ermöglicht.

Gemäß einem zweiten Aspekt der Erfindung weist ein System zur Überwachung eines Sinterprozesses auf: i) eine Sensorvorrichtung, die im Bereich einer Aufprallfläche für Sinterkuchen zum Erfassen eines Aufpralls eines Sinterkuchens auf der Aufprallfläche angeordnet ist; ii) ein erstes Auswertungsmodul, welches zum Ermitteln einer Aufprallcharakteristik auf Grundlage von beim Erfassen des Aufpralls von der Sensorvorrichtung erzeugten Sensordaten eingerichtet ist; iii) ein zweites Auswertungsmodul, welches zum Ermitteln einer Sinterqualität auf Grundlage der ermittelten Aufprallcharakteristik eingerichtet ist; und iv) eine Schnittstelle zum Ausgeben der ermittelten Sinterqualität.

Mit einem derartigen System kann eine Aussage über die Sinterqualität unmittelbar nach dem Stattfinden des Sinterprozesses getroffen werden. Es ist insbesondere kein Warten auf das Ergebnis einer Laboranalyse mehr notwendig. Das System kann einfach in eine bereits bestehende Sinteranlage integriert werden, ohne dass der Sinterprozess oder die nachfolgende Verarbeitung des Sinters beeinträchtigt wird. Mittels des Systems kann Bedienpersonal einer Sinteranlage frühzeitig, insbesondere unmittelbar nach der Herstellung des Sinters, über eine Verschlechterung der Sinterqualität informiert werden, sodass zeitnah Gegenmaßnahmen eingeleitet werden können.

Die Sensorvorrichtung kann als akustischer Sensor, zum Beispiel als Mikrofon, ausgebildet sein. Die Sensorvorrichtung ist zweckmäßigerweise dazu eingerichtet, beim Aufprall des Sinterkuchens auf der Aufprallfläche erzeugte Schallwellen, zum Beispiel im Frequenzbereich von 30 kHz bis 50 kHz, zu erfassen. Alternativ kann die Sensorvorrichtung als Vibrationssensor, d. h. als Körperschallaufnehmer, ausgebildet sein. Der Vibrationssensor ist zweckmäßigerweise dazu eingerichtet, beim Aufprall des Sinterkuchens auf der Aufprallfläche erzeugte Vibrationen, d. h. Körperschall, der Aufprallfläche oder eines damit gekoppelten Bauteils, zum Beispiel im Frequenzbereich von 500 Hz bis 10 kHz, zu erfassen.

Ein Modul im Sinne der vorliegenden Erfindung kann hard- und/oder softwaretechnisch ausgebildet sein. Das Modul kann insbesondere eine, vorzugsweise mit einem Speicher- und/oder Bussystem daten- bzw. signalverbundene, Verarbeitungseinheit aufweisen. Beispielsweise kann das Modul eine Mikroprozessoreinheit (CPU) und/oder ein oder mehrere Programme oder Programmmodule aufweisen. Das Modul kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus auszugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren zumindest teilweise verkörpert bzw. auszuführen imstande ist, sodass das Modul zumindest einen Teil der Schritte solcher Verfahren ausführen kann und damit insbesondere einen Sinterprozess überwachen kann.

Es ist bevorzugt, dass das erste und/oder das zweite Auswertungsmodul als Algorithmen, insbesondere maschinell erlernte Modelle, ausgebildet sind. Es ist auch denkbar, dass das erste und zweite Auswertungsmodul von einem einzigen Algorithmus, insbesondere einem einzigen maschinell erlernten Modell, gebildet sind.

Gemäß einem dritten Aspekt der Erfindung werden bei dem, vorzugsweise zumindest teilweise computerimplementierten, Verfahren zur Kalibration eines Systems gemäß dem zweiten Aspekt der Erfindung die folgenden Schritte ausgeführt: i) sensorisches Erfassen eines Aufpralls eines Sinterkuchens auf einer Aufprallfläche und Erzeugen entsprechender Sensordaten; ii) Ermitteln einer Aufprallcharakteristik auf Grundlage der erzeugten Sensordaten; iii) Ermitteln einer Qualität des Sinters aus dem Sinterkuchen, insbesondere unabhängig von dem Ermitteln der Aufprallcharakteristik; und iv) Zuordnen der ermittelten Sinterqualität zu der ermittelten Aufprallcharakteristik. Die Qualität des Sinters aus dem Sinterkuchen kann beispielsweise mittels einer konventionellen Laboranalyse, bei der etwa der Tumbler-Index oder der harmonische Durchmesser des Sinters bestimmt wird, ermittelt werden. Dadurch kann beispielsweise das als maschinell erlerntes Modell ausgebildete zweite Auswertungsmodul trainiert werden.

In einer bevorzugten Ausführungsform werden die im Zusammenhang mit dem Verfahren gemäß dem dritten Aspekt der Erfindung genannten Schritte mehrmals ausgeführt. Die Sensorvorrichtung kann dabei jeweils an verschiedenen Positionen relativ zur Aufprallfläche positioniert werden. Für jede Ausführung der im Zusammenhang mit dem Verfahren gemäß dem dritten Aspekt der Erfindung genannten Schritten kann dann eine Güte für die Korrelation der ermittelten Aufprallcharakteristik mit der korrespondierenden ermittelten Sinterqualität ermittelt werden. Die Sensorvorrichtung lässt sich so auf Grundlage der ermittelten Güte endgültig relativ zur Aufprallfläche positionieren. So kann sichergestellt werden, dass die Aufprallcharakteristik an der endgültigen Position der Sensorvorrichtung zuverlässig ermittelbar ist. Es kann zum Beispiel ausgeschlossen werden, dass die erfassten Vibrationen durch eine schlechte Kopplung der Sensorvorrichtung an die Aufprallfläche nur unzureichend erfasst werden können oder die erfassten Vibrationen durch die Kopplung beeinträchtigt, zum Beispiel verfälscht, werden.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

FIG 1      ein Beispiel einer Sinteranlage mit einem System zur Überwachung eines Sinterprozesses,

FIG 2      ein Beispiel für Sensordaten einer als Vibrationssensor ausgebildeten Sensorvorrichtung und

FIG 3      ein Beispiel für die Korrelation einer Aufprallcharakteristik mit einer für die Sinterqualität charakteristischen Größe.

Soweit zweckdienlich, werden in den Figuren dieselben Bezugszeichen für dieselben oder einander entsprechende Elemente der Erfindung verwendet.

Beschreibung der Ausführungsformen

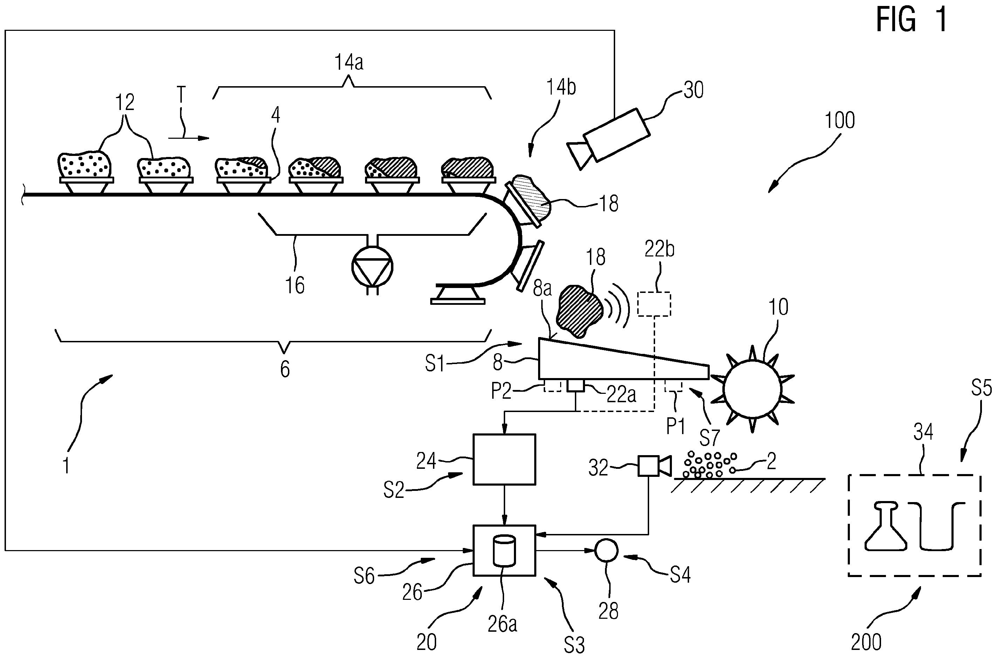

FIG 1 zeigt eine Sinteranlage 1 zur Herstellung eines Sinterprodukts, insbesondere einem Granulat 2 aus gesintertem Material, das beispielsweise zur Verwendung in einem Hochofen geeignet ist. Die Sinteranlage 1 umfasst, neben einem aus mehreren Rostwägen 4 bestehenden Sinterband 6 zur Durchführung eines Sinterprozesses und einer Sinterrutsche 8 zur Förderung des produzierten Sinters zu einer Zerkleinerungsvorrichtung 10, ein System 20 zur Überwachung des Sinterprozesses. Das System 20 weist hierfür eine Sensorvorrichtung 22a, 22b, ein erstes Auswertungsmodul 24, ein zweites Auswertungsmodul 26 sowie eine Schnittstelle 28 auf. Zusätzlich weist das System 20 im vorliegenden Beispiel auch einen optionalen optischen Sensor 30 sowie eine Vermessungsvorrichtung 32 auf.

Zur Herstellung des Sinters wird eine auch als Materialmix bezeichnete Mischung 12 auf einem der Rostwägen 4, von denen aus Gründen der Übersichtlichkeit nur einer mit einem Bezugzeichen versehen ist, angeordnet. Das von den Rostwägen 4 gebildete Sinterband 6 fördert die Mischung 12 in eine Brennzone 14a, in dem ein in der Mischung 12 enthaltener Brennstoff, zum Beispiel Koksgrus, gezündet wird. Ein unterhalb der mit der Mischung 12 beladenen Rostwägen 4 in der Brennzone 14a angeordnetes Unterdrucksystem 16 sorgt dafür, dass die Mischung 12 von oben her vollständig durchbrennt, bis der jeweilige Rostwagen 4 eine Abwurfposition 14b erreicht hat. An der Abwurfposition 14b kippen die Rostwägen 4 von der Horizontalen in die Vertikale, sodass der beim Durchbrennen der Mischung 12 entstandene Sinterkuchen 18 abgeworfen wird. Der abgeworfenen Sinterkuchen 18 prallt auf die Sinterrutsche 8 und rutscht weiter zu der im vorliegenden Beispiel als Stachelbrecher ausgebildeten Zerkleinerungsvorrichtung 10. Die Zerkleinerungsvorrichtung bricht den Sinterkuchen 18 oder, wenn der Sinterkuchen 18 beim Aufprall auf die Sinterrutsche 8 in mehrere Stücke zerbricht, diese Bruchstücke zu dem gewünschten Granulat 2.

Um die Qualität des bei dem Sinterprozess hergestellten Sinters, d. h. die Qualität des Sinters aus dem Sinterkuchen 18, zeitnah ermitteln zu können, kann das System 20 ein Verfahren 100 zur Überwachung des Sinterprozesses ausführen. Hierbei ist die die Sensorvorrichtung 22a, 22b zweckmäßigerweise dazu eingerichtet, den Aufprall des Sinterkuchens 18 auf einer Aufprallfläche 8a, die im vorliegenden Beispiel von der Sinterrutsche 8 gebildet oder bereitgestellt wird, in einem Verfahrensschritt S1 (sensorisch) zu erfassen. Im gezeigten Beispiel ist die Sensorvorrichtung als Vibrationssensor 22a, zum Beispiel als Körperschallaufnehmer, ausgebildet und dazu eingerichtet, Vibrationen, d. h. Körperschallwellen, der Aufprallfläche 8a oder eines damit verbundenen Bauteils, zu erfassen. Versuche haben gezeigt, dass die beim Aufprall des üblicherweise tonnenschweren Sinterkuchens 18 auf die Rutsche 8 verursachten Vibrationen vornehmlich in einem Bereich von 500 Hz bis 10 kHz liegen. Entsprechend ist der Vibrationssensor 22a zweckmäßigerweise zum Erfassen von Vibrationen in diesem Frequenzbereich eingerichtet.

Alternativ oder zusätzlich zu der Erfassung von Vibrationen der Aufprallfläche 8a oder eines damit verbundenen Bauteils können in Verfahrensschritt S1 auch beim Aufprall des Sinterkuchens 18 auf die Aufprallfläche 8a erzeugte Schallwellen erfasst werden. Dies ist in Figur 1 durch die gestrichelt eingezeichnete Sensorvorrichtung 22b angedeutet. Die Sensorvorrichtung ist zweckmäßigerweise als akustischer Sensor 22b, zum Beispiel als Mikrofon, ausgebildet. Versuche haben gezeigt, dass die beim Aufprall des Sinterkuchens 18 auf die Aufprallfläche 8a erzeugten Schallwellen vornehmlich in einem Bereich von 30 kHz bis 50 kHz liegen. Entsprechend ist der akustische Sensor 22b zweckmäßigerweise zum Erfassen von Schallwellen in diesem Frequenzbereich eingerichtet.

Das erste Auswertungsmodul 24 ist zweckmäßigerweise dazu eingerichtet, die beim Erfassen des Aufpralls des Sinterkuchens 18 auf der Aufprallfläche 8a erzeugten Sensordaten der Sensorvorrichtung 22a, 22b auszuwerten. Das erste Auswertungsmodul 24 kann beispielsweise in einem Verfahrensschritt S2 eine Aufprallcharakteristik anhand der Sensordaten erzeugen. Bei der Aufprallcharakteristik kann es sich beispielsweise um ein Maß für die Stärke des Aufpralls handeln. Ein solches Maß, welches auch als Aufprallintensität bezeichnet werden kann, ist beispielsweise durch die Maximalamplitude der beim Aufprall erzeugten Vibrationen der Aufprallfläche 8a (oder dem damit verbundenen Bauteil) oder der beim Aufprall erzeugten Schallwellen gegeben. Entsprechend kann das erste Auswertungsmodul 24 dazu eingerichtet sein, die Maximalamplitude aus den Sensordaten oder einem mit den Sensordaten korrespondierenden Messsignal herauszufiltern.

Gegebenenfalls kann, um das Bestimmen der Aufprallintensität zu erleichtern und/oder das neben der Maximalamplitude auch weitere Signalanteile des Messsignals berücksichtigen zu können, das Messsignal durch Anwendung eines Mittelwertfilters geglättet werden. Auch dies wird zweckmäßigerweise von der ersten Auswertungsvorrichtung 24, insbesondere im Rahmen des Verfahrensschrittes S2, durchgeführt.

Die zweite Auswertungsvorrichtung 26 ist zweckmäßigerweise dazu eingerichtet, auf Grundlage der ermittelten Aufprallcharakteristik eine Qualität des Sinters aus dem Sinterkuchen 18 in einem weiteren Verfahrensschritt S3 zu ermitteln, d. h. zumindest einen Trend in der Sinterqualität festzustellen. Das zweite Auswertungsmodul 26 kann dabei der ermittelten Aufprallcharakteristik beispielsweise eine Sinterqualität, d. h. ein Maß für die Qualität des Sinters, zuordnen. Zu diesem Zweck kann das zweite Auswertungsmodul 26 ein maschinell erlerntes Modell 26a umfassen oder als solche ausgebildet sein. Dieses maschinell erlernte Modell 26a ist zweckmäßigerweise darauf trainiert, einer ermittelten Aufprallcharakteristik eine Sinterqualität zuzuordnen.

Die Ermittlung der Sinterqualität auf Grundlage der Aufprallcharakteristik in Verfahrensschritt S3 kann noch präziser durchgeführt werden, insbesondere die Zuordnung der Sinterqualität zu der ermittelten Aufprallcharakteristik erleichtert werden, indem auch eine Auswertung von optischen Sensordaten, die beim Erfassen des Sinterkuchens 18 mittels des optischen Sensors 30 erzeugt werden, berücksichtigt werden. Mithilfe des optischen Sensors 30 kann beispielsweise festgestellt werden, ob der Sinterkuchen 18 noch sogenannte braune Flecken, d. h. nicht oder zumindest nicht vollständig durchgebrannte (gesinterte) Bereiche, aufweist. Alternativ oder zusätzlich kann mittels der Vermessungsvorrichtung 32 auch die Korngröße des produzierten Granulats 2 vermessen und die sich daraus ergebende Korngrößenverteilung bei der Ermittlung der Sinterqualität berücksichtigt werden.

Über die Schnittstelle 28 wird die ermittelte Sinterqualität schließlich in einem weiteren Verfahrensschritt S4 ausgegeben, zum Beispiel an Bedienpersonal der Sinteranlage 1. Bei der Schnittstelle 28 kann es sich dementsprechend um eine hardwaretechnisch ausgebildete Schnittstelle wie zum Beispiel eine Anzeigevorrichtung handeln. Alternativ oder zusätzlich kann die Schnittstelle 28 auch softwaretechnisch ausgebildet sein, um die ermittelte Sinterqualität anderen technischen Einrichtungen, zum Beispiel einem Steuerungssystem der Sinteranlage 1, bereitstellen zu können. Nach der Ausgabe über eine solche softwaretechnisch ausgebildete Schnittstelle 28 kann die ermittelte Sinterqualität gegebenenfalls auch weiterverarbeitet, zum Beispiel in eine für die Ausgabe an Bedienpersonal geeignete Form, gebracht werden.

Um das System 20 zu kalibrieren, kann ein entsprechendes Verfahren 200 angewandt werden. Dazu werden die Verfahrensschritte S1 und S2 mehrmals ausgeführt, wobei die Sensorvorrichtung 22a, 22b in einem Verfahrensschritt S7 jeweils an verschiedenen Positionen P1, P2 positioniert wird. Zugleich wird, unabhängig von der Ermittlung der Aufprallcharakteristik in Verfahrensschritt S2, eine Qualität des Sinters aus dem jeweiligen Sinterkuchen 18 in einem weiteren Verfahrensschritt S5 ermittelt. Dazu können beispielsweise Proben aus dem Granulat 2 entnommen und in einem Labor 34 ausgewertet werden. Die derart (extern) ermittelte Sinterqualität wird dann jeweils in einem Verfahrensschritt S6 der ermittelten Aufprallcharakteristik zugeordnet. So kann eine Korrelation zwischen der ermittelten Aufprallcharakteristik und der absoluten, für die Aufprallcharakteristik ausschlaggebende Sinterqualität ermittelt werden, und zwar in Abhängigkeit der Sensorposition P1, P2. Dabei wird die ermittelte Korrelation mit den verschiedenen Positionen P1, P2 variieren, je nachdem, wie "gut" bzw. unbeeinträchtigt sich an der jeweiligen Position P1, P2 der Aufprall mittels der Sensorvorrichtung 22a, 22b erfassen lässt. Ein Maß für die ermittelten Korrelationen lässt sich dann einer endgültigen Positionierung der Sensorvorrichtung 22a, 22b zugrunde legen. Die Sensorvorrichtung 22a, 22b kann insbesondere dort positioniert werden, wo das Maß für die Korrelation besonders groß ist, der Aufprall also besonders zuverlässig erfasst werden kann.

Es sei angemerkt, dass die Sinterrutsche 8 in FIG 1 nur beispielhaft für verschiedene, mögliche Fördervorrichtungen, welche den abgeworfenen Sinterkuchen 18 zur Zerkleinerungsvorrichtung 10 befördern können, steht. Ebenso denkbar ist es, anstelle der Sinterrutsche 8 ein Förderband, Förderwägen und/oder dergleichen vorzusehen. Die Aufprallfläche 8a kann entsprechend von der jeweiligen Fördervorrichtung bereitgestellt werden. Alternativ kann auch gar keine Fördervorrichtung vorgesehen sein. Stattdessen kann der Sinterkuchen 18 auch direkt auf die Zerkleinerungsvorrichtung 10, z. B. direkt auf einen Stachelbrecher oder diesem vorgeordnete Stößel zur groben Vorstückelung des Sinterkuchens 18, abgeworfen werden. In diesem Fall werden zweckmäßigerweise die dadurch in der Zerkleinerungsvorrichtung 10 erzeugten Vibrationen erfasst.

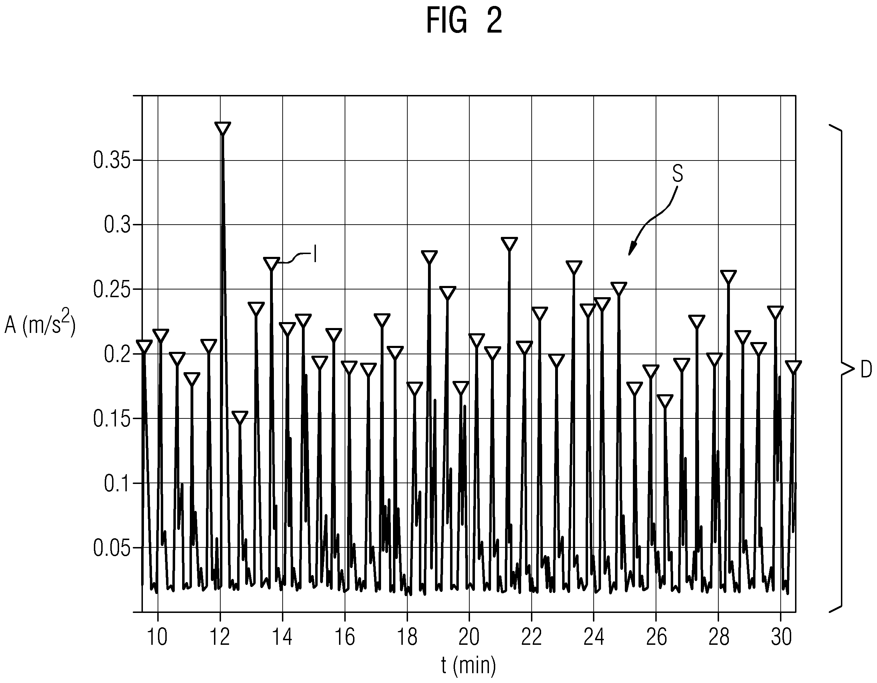

FIG 2 zeigt ein Beispiel für Sensordaten D, die von einer als Vibrationssensor ausgebildeten Sensorvorrichtung beim Erfassen von Vibrationen beim Aufprall eines Sinterkuchens auf einer Aufprallfläche erzeugt wurden. Im vorliegenden Beispiel korrespondieren die Sensordaten D mit einem Messsignal S, welches die Amplitude A der erfassten Vibrationen über die Zeit t, hier über einen Zeitraum von etwas über 20 Minuten, angibt. Pro Minute fanden etwa zwei Aufprallereignisse statt. Die einzelnen, in FIG 2 durch ein Dreieck markierten Peaks markieren jeweils ein solches Aufprallereignis. Die Höhe dieser Peaks, d. h. die maximale Amplitude A der erfassten Vibrationen, korrespondiert mit einer Intensität I des Aufpralls des Sinterkuchens auf der Aufprallfläche, wobei aus Gründen der Übersichtlichkeit nur eine dieser Aufprallintensitäten mit einem Bezugszeichen versehen ist. Die Aufprallintensität I liegt im vorliegenden Beispiel - bis auf einen Ausreißer - in einem Bereich zwischen 0,15 und 0,3 m/s². Dies entspricht einer erwartbaren Fluktuation beispielsweise aufgrund von leichten, nicht kontrollierbaren Änderungen in den Umgebungsbedingungen während des jeweiligen Sinterprozesses, dem nicht kontrollierbaren Abwurf des Sinterkuchens aus dem Rostwagen und/oder dergleichen. Es ist daher zweckmäßig, die Aufprallintensität I über den gezeigten Zeitraum von etwa 20 Minuten zusammenzufassen, beispielsweise durch eine Mittelung. Die gemittelte Aufprallintensität stellt eine von Umwelteinflüssen zumindest weitgehend bereinigte Aufprallcharakteristik dar. Dieser Aufprallcharakteristik kann zuverlässig eine Qualität des Sinters aus den im Mittelungszeitraum hergestellten Sinterkuchen zugeordnet werden.

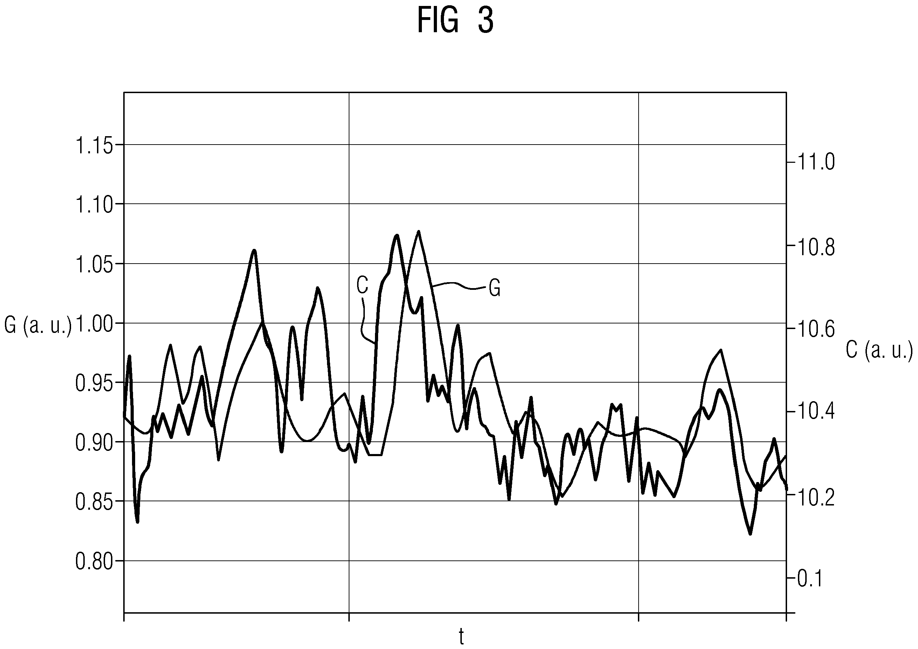

FIG 3 zeigt ein Beispiel für die Korrelation einer Aufprallcharakteristik C mit für die Sinterqualität charakteristischen Größe G. Die Aufprallcharakteristik C wurde aus Sensordaten ermittelt, die bei der Erfassung eines Aufpralls einer Vielzahl von Sinterkuchen auf eine Aufprallfläche erzeugt wurden. Insbesondere handelt es sich bei der Aufprallcharakteristik um die über einen vorbestimmten Zeitraum, zum Beispiel 20 Minuten, gemittelte Maximalamplitude (peak acceleration) von beim Aufprall der Sinterkuchen auf der Aufprallfläche innerhalb dieses Zeitraums erzeugten Vibrationen (vgl. FIG 2). Die charakteristische Größe G ist im vorliegenden Beispiel der harmonische Durchmesser des Sinters aus den entsprechenden Sinterkuchen. Sowohl die Aufprallcharakteristik C als auch die charakteristische Größe G sind im vorliegenden Beispiel normiert, sodass die Korrelation zwischen diesen beiden Größen leichter ersichtlich ist.

Die in FIG 3 gezeigten Daten entstammen der Sinterproduktion über einen Zeitraum von einigen Tagen. Wie aus FIG 3 ersichtlich ist, korreliert die konventionell im Labor etwa 5-13 Stunden nach der Produktion des jeweiligen Sinterkuchen ermittelte charakteristische Größe G ausreichend gut mit der für die entsprechenden Sinterkuchen unmittelbar nach dem Produktionsprozesses ermittelten Aufprallcharakteristik C, um ausschließlich anhand der Aufprallcharakteristik C jedenfalls auf eine Zu- oder Abnahme der Sinterqualität schließen zu können. Auch wenn im vorliegenden Beispiel auf Grundlage der ermittelten Aufprallcharakteristik C noch keine quantitative Aussage über die Sinterqualität gemacht werden kann, können jedenfalls Trends in der Qualität festgestellt werden. Folglich lässt sich die Sinterproduktion somit überwachen. Insbesondere kann beispielsweise ein Alarm ausgegeben werden, wenn die Aufprallcharakteristik C unter einen vorbestimmten Schwellenwert sinkt, was auf eine signifikante Abnahme der Sinterqualität hinweisen kann.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 1 | Sinteranlage |
| 2 | Granulat |
| 4 | Rostwagen |
| 6 | Sinterband |
| 8 | Sinterrutsche |
| 8a | Aufprallfläche |
| 10 | Zerkleinerungsvorrichtung |
| 12 | Mischung |
| 14a | Brennzone |
| 14b | Abwurfposition |
| 16 | Unterdrucksystem |
| 18 | Sinterkuchen |
| | |
| 20 | System |
| 22a | Vibrationssensor |
| 22b | akustischer Sensor |
| 24 | erstes Auswertungsmodul |
| 26 | zweites Auswertungsmodul |
| 26a | maschinell erlerntes Modell |
| 28 | Schnittstelle |
| 30 | optischer Sensor |
| 32 | Vermessungsvorrichtung |
| 34 | Labor |
| | |
| 100, 200 | Verfahren |
| S1 | Aufprall erfassen |
| S2 | Aufprallcharakteristik ermitteln |
| S3 | Sinterqualität ermitteln |
| S4 | Sinterqualität ausgeben |
| S5 | Sinterqualität (extern) ermitteln |

| S6 | Aufprallcharakteristik einer (extern ermittelten) Sinterqualität zuordnen |
|---|---|
| S7 | Sensorvorrichtung positionieren |

| D | Sensordaten |
|---|---|
| S | Messsignal |
| C | Aufprallcharakteristik |
| G | charakteristische Größe |
| A | Amplitude |
| I | Aufprallintensität |
| t | Zeit |
| P1, P2 | Sensorposition |

**Patentansprüche**

1. Verfahren (100) zur Überwachung eines Sinterprozesses, mit den Schritten:

   - sensorisches Erfassen (S1) eines Aufpralls eines Sinterkuchens (18) auf einer Aufprallfläche (8a) und Erzeugen entsprechender Sensordaten (D);
   - Ermitteln (S2) einer Aufprallcharakteristik (C) auf Grundlage der erzeugten Sensordaten (D);
   - Ermitteln (S3) einer Qualität des Sinters aus dem Sinterkuchen (18) auf Grundlage der ermittelten Aufprallcharakteristik (C); und
   - Ausgeben (S4) der ermittelten Sinterqualität.

2. Verfahren (100) nach Anspruch 1, wobei der Aufprall mittels eines akustischen Sensors (22b) in einem Frequenzbereich von 30 kHz bis 50 kHz erfasst wird.

3. Verfahren (100) nach Anspruch 1 oder 2, wobei durch den Aufprall erzeugte Vibrationen der Aufprallfläche (8a) und/oder eines mit der Aufprallfläche (8a) verbundenen Bauteils mittels eines Vibrationssensors (22a) in einem Frequenzbereich von 500 Hz bis 10 kHz erfasst werden.

4. Verfahren (100) nach einem der vorangehenden Ansprüche, wobei auf Grundlage der Sensordaten (D) eine Aufprallintensität (I) ermittelt und der Qualitätsermittlung zugrunde gelegt wird.

5. Verfahren (100) nach einem der vorangehenden Ansprüche, wobei eine den Aufprall charakterisierende Größe (G) für mehrere Sinterkuchen (18) auf Grundlage der jeweils erzeugten Sensordaten (D) ermittelt und diese Größe (G) über einen vorgegebenen Zeitraum, in dem die mehreren Sinterkuchen (18) auf die Aufprallfläche (8a) aufprallen, gemittelt wird, bevor die Sinterqualität auf Grundlage der gemittelten Größe ermittelt wird.

6. Verfahren (100) nach einem der vorangehenden Ansprüche, wobei

   - ein Granulat (2) aus dem Sinterkuchen (18) hergestellt wird, indem der Sinterkuchen (18) oder dessen Bruchstücke nach dem Aufprall weiter aufgebrochen werden,
   - eine Verteilung von Korngrößen im hergestellten Granulat (2) ermittelt wird und
   - die Sinterqualität zusätzlich auf Grundlage der ermittelten Korngrößenverteilung ermittelt wird.

7. Verfahren (100) nach einem der vorangehenden Ansprüche, wobei die Sinterqualität auf Grundlage der ermittelten Aufprallcharakteristik (C) von einem maschinell erlernten Modell (26a) ermittelt wird, welches auf Grundlage von einem Trainingsdatensatz trainiert ist, in welchem eine Vielzahl von Aufprallcharakteristiken (C) jeweils verknüpft sind mit wenigstens einer Größe (G), die das gesinterte Material charakterisiert.

8. Verfahren (100) nach einem der vorangehenden Ansprüche, wobei ein mit den beim Erfassen des Aufpralls erzeugten Sensordaten (D) korrespondierendes Messsignal (S) durch Anwendung eines Mittelwertfilters geglättet und die Aufprallcharakteristik (C) auf Grundlage des geglätteten Messsignals (S) ermittelt wird.

9. System (100) zur Überwachung eines Sinterprozesses, mit

   - einer Sensorvorrichtung (22a, 22b), die im Bereich einer Aufprallfläche (8a) für Sinterkuchen (18) zum Erfassen eines Aufpralls eines Sinterkuchens (18) auf der Aufprallfläche (8a) angeordnet ist,
   - einem ersten Auswertungsmodul (24), welches zum Ermitteln einer Aufprallcharakteristik (C) auf Grundlage von beim Erfassen des Aufpralls von der Sensorvorrichtung (22a, 22b) erzeugten Sensordaten (D) eingerichtet ist,
   - einem zweiten Auswertungsmodul (26), welches zum Ermitteln einer Sinterqualität auf Grundlage der ermittelten Aufprallcharakteristik (C) eingerichtet ist, und
   - einer Schnittstelle (28) zum Ausgeben der ermittelten Sinterqualität.

10. Verfahren (200) zur Kalibration eines Systems (100) nach Anspruch 9, mit den Schritten:

   - sensorisches Erfassen (S1) eines Aufpralls eines Sinterkuchens (18) auf einer Aufprallfläche (8a) und Erzeugen entsprechender Sensordaten (D),
   - Ermitteln (S2) einer Aufprallcharakteristik (C) auf Grundlage der erzeugten Sensordaten (D),
   - Ermitteln (S5) einer Qualität des Sinters aus dem Sinterkuchen (18),

- Zuordnen (S6) der ermittelten Sinterqualität zu der ermittelten Aufprallcharakteristik (C).

11. Verfahren (200) nach Anspruch 10, wobei

- die Schritte (S1, S2, S5, S6) aus Anspruch 11 mehrmals ausgeführt werden und die Sensorvorrichtung (22a, 22b) dabei jeweils an verschiedenen Positionen (P1, P2) relativ zur Aufprallfläche (8a) positioniert wird (S7),
- dabei für jede Ausführung der Schritte (S1, S2, S5, S6) aus Anspruch 11 ein Maß für die Korrelation der ermittelten Aufprallcharakteristik (C) mit der korrespondierenden ermittelten Sinterqualität ermittelt wird und
- die Sensorvorrichtung (22a, 22b) auf Grundlage der ermittelten Maße endgültig relativ zur Aufprallfläche (8a) positioniert wird.

FIG 1

# FIG 2

FIG 3

Europäisches
Patentamt

European
Patent Office

Office européen
des brevets

**Nummer der Anmeldung**

EP 24 21 7197

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DENZEL MICHAEL ET AL: "Development of an automated single particle impact tester for iron ore sinter", MINERALS ENGINEERING, ELSEVIER, AMSTERDAM, NL, Bd. 175, 20. November 2021 (2021-11-20), XP086881948, ISSN: 0892-6875, DOI: 10.1016/J.MINENG.2021.107291 [gefunden am 2021-11-20] * "Abstract" * * Seite 3, "2.2 Drop test" * * Seiten 3-4; "2.3.2; separation"; Abbildungen 1,4; Tabelle 4 * * Seite 6; "2.3.5"; low cost automation by Aeduinos" * | 1-11 | INV. C21B5/00 C22B1/20 G01N29/12 G01N29/14 |
| | ----- | | |
| X | EP 3 356 814 B1 (TIPCO TUDESHKI IND PROCESS CONTROL GMBH [DE]) 17. Juli 2019 (2019-07-17) | 9 | |
| A | * Absatz [0053]; Ansprüche 1,17 * | 1-8,10, 11 | |
| | ----- | | |
| E | EP 4 492 051 A1 (KIMA PROCESS CONTROL GMBH [DE]) 15. Januar 2025 (2025-01-15) * Absätze [0036], [0049], [0050], [0054], [0057], [0059]; Ansprüche 1,3; Abbildungen 2-4 * | 1-4,7-9 | |
| | ----- | | |

| RECHERCHIERTE SACHGEBIETE (IPC) |
|---|
| C21B C22B G01N |

Der vorliegende Recherchenbericht wurde für alle Patentansprüche erstellt

| Recherchenort | Abschlußdatum der Recherche | Prüfer |
|---|---|---|
| Den Haag | 8. Mai 2025 | Momeni, Mohammad |

**ANHANG ZUM EUROPÄISCHEN RECHERCHENBERICHT
ÜBER DIE EUROPÄISCHE PATENTANMELDUNG NR.**

EP 24 21 7197

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2025

| Im Recherchenbericht angeführtes Patentdokument | Datum der Veröffentlichung | Mitglied(er) der Patentfamilie | Datum der Veröffentlichung |
|---|---|---|---|
| EP 3356814 B1 | 17-07-2019 | DE 102015116379 A1 | 30-03-2017 |
| | | EP 3356814 A1 | 08-08-2018 |
| | | WO 2017055064 A1 | 06-04-2017 |
| EP 4492051 A1 | 15-01-2025 | EP 4492051 A1 | 15-01-2025 |
| | | WO 2025012391 A1 | 16-01-2025 |

EPO FORM P0461

Für nähere Einzelheiten zu diesem Anhang : siehe Amtsblatt des Europäischen Patentamts, Nr.12/82